# EUROPÄISCHE PATENTSCHRIFT

(11) **EP 4 064 644 B1**
(45) Veröffentlichungstag und Bekanntmachung des Hinweises auf die Patenterteilung: **12.11.2025**
(21) Anmeldenummer: 22164166.5
(22) Anmeldetag: 24.03.2022
(51) Int. Cl.: H04L 49/109, G06F 15/78, H04Q 11/04, H04L 45/16, H04Q 11/06, H04L 47/2416, H04L 45/28

(54) **KOMMUNIKATIONSVERFAHREN IN EINEM NETWORK-ON-CHIP**
COMMUNICATION METHOD IN A NETWORK-ON-A-CHIP
PROCÉDÉ DE COMMUNICATION DANS UN RÉSEAU SUR PUCE

(30) Priorität: 25.03.2021 DE 102021107484
(43) Veröffentlichungstag der Anmeldung: 28.09.2022
(60) Teilanmeldung: 25207090.9
(73) Patentinhaber: Airbus Defence and Space GmbH, 82024 Taufkirchen (DE)
(72) Erfinder: Uhrig, Sascha, 82024 Taufkirchen (DE); Freitag, Johannes, 82024 Taufkirchen (DE)
(74) Vertreter: KASTEL Patentanwälte PartG mbB

(56) Entgegenhaltungen:
- WO-A1-2009/140707
- ARUN M R ET AL: "A Novel Energy Efficient Multicasting Approach For Mesh NoCs", PROCEDIA COMPUTER SCIENCE, ELSEVIER, AMSTERDAM, NL, vol. 93, 12 August 2016 (2016-08-12), pages 283 - 291, XP029684046, ISSN: 1877-0509, DOI: 10.1016/J.PROCS.2016.07.212
- DANESHTALAB M ET AL: "A generic adaptive path-based routing method for MPSoCs", JOURNAL OF SYSTEMS ARCHITECTURE, ELSEVIER BV, NL, vol. 57, no. 1, 1 January 2011 (2011-01-01), pages 109 - 120, XP027562190, ISSN: 1383-7621, [retrieved on 20100818]
- PAKDAMAN FARHAD ET AL: "Integrated circuit-packet switching NoC with efficient circuit setup mechanism", THE JOURNAL OF SUPERCOMPUTING, SPRINGER US, NEW YORK, vol. 71, no. 8, 23 November 2014 (2014-11-23), pages 2787 - 2807, XP035518460, ISSN: 0920-8542, [retrieved on 20141123], DOI: 10.1007/S11227-014-1337-0

## Beschreibung

Die Erfindung betrifft Kommunikationsverfahren in einem Network-on-Chip (NoC). Ferner betrifft die Erfindung ein NoC, ein Computerprogramm sowie ein Datenträgersignal, welche das Kommunikationsverfahren verwirklichen.

NoC sind allgemein bekannt und bezeichnen üblicherweise untereinander verbundene (Unter-)Komponenten innerhalb eines einzelnen Mikrochips. Typischerweise basieren solche NoCs auf Hops, d.h. dass Daten von einem Teilnehmer zum Nächsten übertragen werden, wobei Punkt-zu-Punkt (P2P) oder Punkt-zu-Multipunk (Multicast) Verbindungen bereitgestellt werden.

Fall es unterstützt wird, werden Multicasts dadurch implementiert, dass Nachrichtenrouten durch alle Ziel-Knoten geleitet werden und die Daten an diesen Destinationen abgeladen werden, während sie weiter zu der nächsten Destination geleitet werden. Abhängig von der Art des NoC können Nachrichtenrouten statisch oder dynamisch bestimmt sein und durch den Quell-Knoten oder individuell durch jeden Router (d.h. die Routing-Komponente in der Nähe eines Knotens).

Daneshtalab M et al.: "A generic adaptive path-based routing method for MPSoCs", Journal of Systems Architecture, Elsevier BV, NL, Bd. 57, Nr. 1, 1. Januar 2011 (2011-01-01), Seiten 109-120, XP027562190, ISSN: 1383-7621, gefunden am 2010-08-18 offenbart ein Multicast Unicast Verfahren auf Grundlage eines Hamilton-Pfades und ein Verfahren zum spaltenmäßigen Pfad-Multicast-Routing. Dabei werden viele Multicast-Nachrichten erzeugt, um alle gewünschten Zielknoten zu erreichen.

Es ist die Aufgabe der Erfindung, NoCs zu verbessern, insbesondere hinsichtlich ihres Funktionsumfangs.

Die Aufgabe wird durch den Gegenstand der unabhängigen Ansprüche gelöst. Bevorzugte Weiterbildungen sind Gegenstand der abhängigen Ansprüche. Die Erfindung ist definiert durch die Ansprüche.

Die Erfindung schafft ein Verfahren zur verzweigten Kommunikation in einem statisch gerouteten und zeitsensitiven NoC, das eine Mehrzahl von Routerknoten aufweist, die untereinander verbunden sind, so dass es den Routerknoten ermöglicht ist, untereinander Nachrichten auszutauschen, wobei das Verfahren umfasst:
a) Senden einer Nachricht, die Flusskontrolldaten und Nutzdaten enthält, durch einen Quellenknoten an einen Routerknoten, wobei die Flusskontrolldaten wenigstens ein Flit mit wenigstens einem Hop enthalten, die eine Hauptroute zu einem Hauptzielknoten und wenigstens eine Zweigroute zu einem Zweigzielknoten definieren;
b) Empfangen der Nachricht durch den Routerknoten;
c) Ändern der in Schritt b) empfangenen Flusskontrolldaten durch den Routerknoten um geänderte Flusskontrolldaten zu erhalten, indem, um geänderte Flusskontrolldaten für die Hauptroute zu erhalten, aus dem aktuellen Flit der aktuelle Hop entfernt wird und, wenn der aktuelle Hop einen Branch-Marker enthält, alle dem Branch-Marker zugeordneten Hops aus den empfangenen Flusskontrolldaten entfernt werden, und indem, um geänderte Flusskontrolldaten für die Zweigroute zu erhalten, alle dem Branch-Marker zugeordneten Hops in die Flusskontrolldaten für die Zweigroute eingetragen werden; und
d) Weiterleiten der Nachricht, welche die in Schritt c) geänderten Flusskontrolldaten enthält, entsprechend den in Schritt b) empfangenen Flusskontrolldaten,
wobei die Nachricht entlang der Hauptroute mit den in Schritt c) erhaltenen Flusskontrolldaten für die Hauptroute weitergeleitet wird und wobei die Nachricht entlang der Zweigroute mit Flusskontrolldaten für die Zweigroute weitergeleitet wird.

Es ist bevorzugt, dass in Schritt d) das Weiterleiten der Nachricht entlang der Zweigroute nach einer Abzweigung von der Hauptroute dadurch erfolgt, dass der aktuelle Hop der Zweigroute entfernt wird und die Nachricht mit den so veränderten Flusskontrolldaten an den nächsten Knoten entlang der Zweigroute weitergeleitet wird.

Die Erfindung schafft ein NoC, das eine Mehrzahl von Routerknoten aufweist, die untereinander verbunden sind, so dass es den Routerknoten ermöglicht ist, untereinander Nachrichten auszutauschen, wobei das NoC konfiguriert ist, gemäß einem bevorzugten Verfahren zu operieren.

Die Erfindung schafft ein Computerprogramm umfassend Befehle, die bei der Ausführung der Befehle durch das bevorzugte NoC dieses veranlassen, eines der bevorzugten Verfahren auszuführen.

Die Erfindung schafft ein Datenträgersignal, das das bevorzugte Computerprogramm überträgt.

Die Erfindung schafft eine Flusskontrolldatenstruktur für Flusskontrolldaten zur Verwendung in einem NoC, wobei die Flusskontrolldaten ein Flit mit einem Hop aufweisen, wobei der Hop eine Hauptroutenangabe und einen Branch-Marker mit jeweils zugeordneten Hops aufweist, wobei die die Hauptroutenangabe einen Routerknoten veranlasst, eine Nachricht an den nächsten Hop entlang einer Hauptroute weiterzuleiten, und wobei der Branch-Marker einen Routerknoten veranlasst, die Nachricht an den nächsten Hop entlang einer von der Hauptroute abgezweigten Zweigroute weiterzuleiten.

Eine weitere Idee ist es, die Funktionalität hinsichtlich verzweigter Kommunikation zu verbessern.

Ein NoC kann ein Routing verwenden, bei dem die eigentliche Route einer Nachricht in dem Nachrichtenheader gespeichert ist. In diesem Fall enthält der Header Informationen über alle Hops, d.h. welcher Weg (N, O, S, W, lokaler Port) an dem nächsten Router genommen wird. Typischerweise wird diese Information in einer Queue bereitgestellt, aus der das erste Element während eines Hops entfernt wird. Entsprechend ist nunmehr das nächste Element die für den nächsten Hop relevante Information. Das letzte Element dieser Queue enthält einen Marker, der das letzte Element als dieses identifiziert.

Wenn unterstützt, werden Multicasts typischerweise dadurch implementiert, dass eine Nachrichtenroute sequenziell durch alle Ziele hindurchverläuft und die Nachricht an den lokalen Port von mehreren Routern geliefert wird.

Es wird eine Methode vorgeschlagen, die zusätzlich Seitwärtsverzweigungen von der Hauptnachrichtenroute ermöglicht. Dieser Ansatz kann durch Hops verwirklicht werden, die einen "Branch"-Marker zusammen mit Informationen darüber enthalten, wie viele Hops für den Seitenzweig relevant sind. Die relevanten Hop-Daten werden in den Zweig geforwarded (und aus der Haupt-Queue entfernt) während diejenigen Hops, die den Zweig-Hops nachfolgen weiter die Hauptroute beschreiben.

Eine Implementierung kann auf einer Routing-Queue basiert sein, die mehreren Netzwerk-Flits (kleine Datenbereiche, die durch das NoC in einem Zeitschritt übertragen werden) gespeichert ist. Ein solcher Flit kann *f* Hops und *N* Flits enthalten, welche die komplette Route einschließlich Zweigen beschreiben. Wenn ein Hop *b* einen Zweig markiert, beschreiben die verbleibenden Hops in dem Flit den Zweig und der besagte Flit wird nur zu diesem Zweig geforwarded. Das Ende der (Zweig-)Route wird in dem speziellen Flit angezeigt werden, d.h. die Länge des Zweigs ist durch *f* limitiert und weitere Unterzweige sind in dieser Implementierung nicht möglich.

Das weitere Routing der Hauptroute wird mit dem nachfolgenden Flit fortgesetzt, der in beide Richtungen, Zweit und Hauptroute, (wie auch der Rest der Nachricht) gesendet wird. Weitere Zweige von der Hauptroute können auf die gleiche Art implementiert werden. Wie in der nachfolgenden Tabelle gezeigt, kann ein Hauptsegment die Hops 1 bis 5, einen Zweig mit drei Hops 6a bis 8a, ein nachfolgendes Hauptsegment mit einem Hop 6m, einen weiteren Zweig mit Hops 7b und 8b sowie die Fortsetzung der Hauptroute mit den Hops 7m bis 11m aufweisen.

| **Head Flit** | | | | | |
|---|---|---|---|---|---|
| Hop 1 | Hop 2 | Hop 3 | Hop 4 | Hop 5 | *nextflit* |
| *Branch 1* | Hop 6a | Hop 7a | Hop 8a | *end* | |
| Hop 6m | *Branch 2* | Hop 7b | Hop 8b | *end* | |
| Hop 7m | Hop 8m | Hop 9m | Hop 10m | Hop 11m | *end* |

| **Data Flits** | | | | | |
|---|---|---|---|---|---|
| Lorem ipsum dolor sit amet ... | | | | | |
| consectetur adipiscing elit, sed do eiusmod tempor ... | | | | | |

Ausführungsbeispiele werden im Folgenden anhand der beigefügten schematischen Zeichnungen näher erläutert. Darin zeigt:
- Fig. 1: ein Beispiel für einen Mikrochip mit einem NoC;
- Fig. 2: ein Beispiel für ein NoC im Betrieb mit Multiquellen-Kommunikation;
- Fig. 3: ein Beispiel für ein NoC im Betrieb mit Zweigkommunikation; und
- Fig. 4: ein Beispiel für ein NoC im Betrieb mit einem virtuellen Bus.

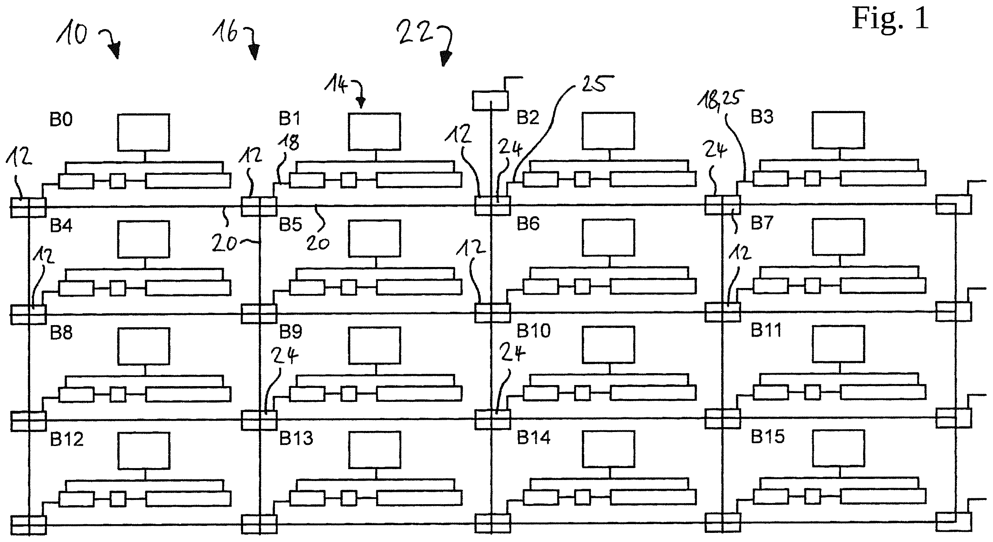

Es wird nachfolgend auf Fig. 1 Bezug genommen, die schematisch einen Mikrochip 10 zeigt. Der Mikrochip 10 weist eine Mehrzahl von Funktionseinheiten B0, ..., B15 auf. Jede Funktionseinheit B0, ..., B15, umfasst eine Routerkomponente 12 und eine Funktionskomponente 14. Wie in Fig. 1 angedeutet können mehrere Funktionskomponenten 14, hier beispielsweise sechzehn Funktionskomponenten 14, zu einem Funktionsblock 16 zusammengefasst werden. Der Mikrochip 10 kann mehrere dieser Funktionsblöcke 16 haben.

Die Routerkomponenten 12 können Nachrichten empfangen und senden. Die Routerkomponenten 12 sind untereinander verbunden. Die Routerkomponenten 12 sind ferner eingerichtet, Nachrichten, die für die an die Routerkomponente 14 angeschlossene Funktionskomponente 14 bestimmt sind an diese zur weiteren Verarbeitung weiterzureichen.

Die Routerkomponenten 12 haben wenigstens zwei Anschlüsse, einen Komponentenanschluss 18 und einen oder mehrere Routinganschlüsse 20. Der Komponentenanschluss 18 ist mit der Funktionskomponente 14 verbunden. Jeder Routinganschluss 20 ist mit einem Routinganschluss 20 einer anderen Routingkomponente 12 verbunden.

Der Mikrochip 10 ist ferner so gestaltet, dass er ein NoC 22 enthält, durch das die Funktionseinheiten B0, ..., B15 mittels ihrer Routerkomponenten 12 untereinander kommunizieren können. Das NoC 22 ist als statisch geroutetes, zeitsensitives Netzwerk konfiguriert (engl. "statically routed time-sensitive network", hierin auch kurz als TSN bezeichnet).

Jede Routerkomponente 12 bildet einen Routerknoten 24 des NoC 22. Jeder Komponentenanschluss 18 bildet einen lokalen Port 25. Jeder Routinganschluss 20 kann auch mit einer Himmelsrichtung (N, E, S, W) bezeichnet werden, die angibt in welcher Richtung er mit einem weiteren Routerknoten 24 verbunden ist.

So bezeichnet beispielsweise "N" einen Routinganschluss 20, der mit einem Routerknoten 24 nach oben in Fig. 1 verbunden ist. Entsprechend bezeichnen "E", "S" und "W" die Richtungen nach rechts, unten und links. Es sollte beachtet werden, dass die Himmelsrichtungen, wie sie hierin verwendet werden, lediglich illustrativen Zwecken dienen und Angaben darüber vereinfachen sollen, in welche Richtungen Nachrichten, Daten und dergleichen gesendet oder weitergeleitet werden.

Wenn nicht anders angegeben, sind der Mikrochip 10 und das NoC 22 unabhängig von den nachfolgend beschriebenen Betriebs-/Kommunikationsarten wie soeben erläutert ausgebildet.

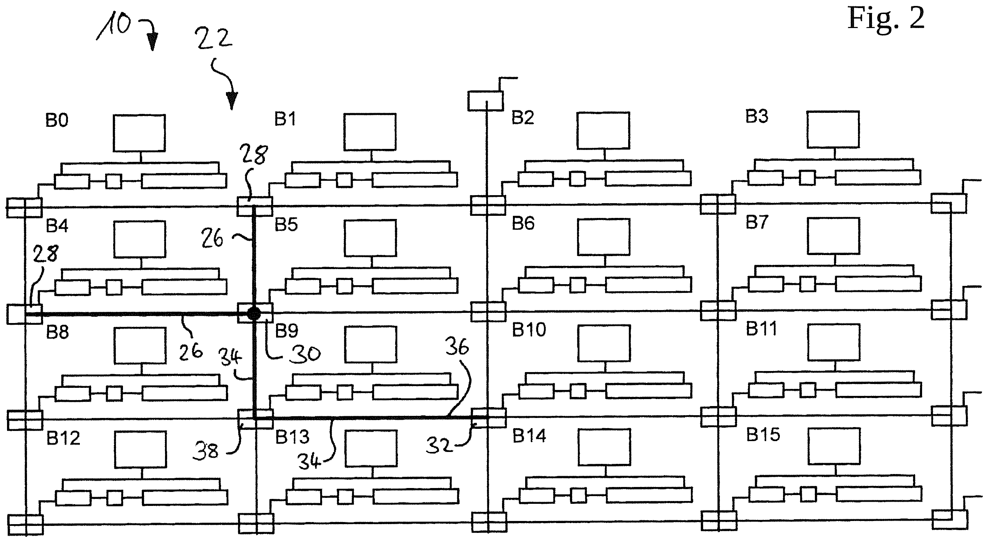

Mit Bezug auf Fig. 2 wird erläutert, wie in dem NoC 22 eine Multiquellen-Kommunikation verwirklicht werden kann.

Bei der Multiquellen-Kommunikation werden identische Nachrichten 26 von wenigstens zwei Quellenknoten 28 über einen Zwischenknoten 30 an einen Zielknoten 32 gesendet. Jede Nachricht 26 enthält Flusskontrolldaten, Nutzdaten und eine Prüfsumme. Die identischen Nachrichten 26 werden unter Verwendung der Eigenschaften des NoC 22 von jedem Quellenknoten 28 derart ausgesendet, dass die Nachrichten 26 zum gleichen vorbestimmten Zeitpunkt an dem vorbestimmten Zwischenknoten 30 eintreffen.

Der Zwischenknoten 30 kombiniert die beiden Nachrichten 26 mittels einer bitweisen OR-Operation oder einer bitweisen AND-Operation in eine kombinierte Nachricht 34. Der Zwischenknoten 30 sendet die kombinierte Nachricht 34 über ein nächstes Routensegment 36 ggfs. über weitere Zwischenknoten 38 zu dem Zielknoten 32. Die weiteren Zwischenknoten 38 leiten die kombinierte Nachricht 34 lediglich weiter und führen keine Operation auf der Nachricht aus.

Der Zielknoten 32 empfängt die kombinierte Nachricht 34 und die Funktionskomponente 14 prüft diese anhand der Prüfsumme. Ist die Validierung anhand der Prüfsumme erfolgreich, so werden zumindest die Nutzdaten von der Funktionskomponente 14 weiter verarbeitet. Falls die Validierung anhand der Prüfsumme fehlschlägt, wird die Nachricht 34 verworfen. Der Fehlschlag kann über einen Rückkanal an die Quellenknoten 28 übermittelt werden.

In einer Variante können wenigstens drei Quellenknoten 28 jeweils wenigstens zwei identische Nachrichten 26 aussenden, die paarweise in einem Zwischenknoten 38 in insgesamt wenigstens drei kombinierte Nachrichten 34 kombiniert werden. Die kombinierten Nachrichten 34 werden sodann gegebenenfalls über unterschiedliche Routen zu dem Zielknoten 32 gesendet. Die Funktionskomponente 14 prüft wiederum die erste Nachricht anhand der Prüfsumme. Wenn die Validierung einer der drei kombinierten Nachrichten 34 erfolgreich war, dann war die Validierung insgesamt erfolgreich, weil dies angibt, dass zwei unabhängige Quellenknoten 28 dieselben Nachrichten 26 ausgesandt haben.

In einer weiteren Variante können drei Quellenknoten 28 identische Nachrichten 26 an den Zielknoten 32 senden. Die Nachrichten 26 werden in dem Zielknoten 32 miteinander verglichen, wobei die Validierung als erfolgreich gilt, wenn zwei von drei Nachrichten übereinstimmen.

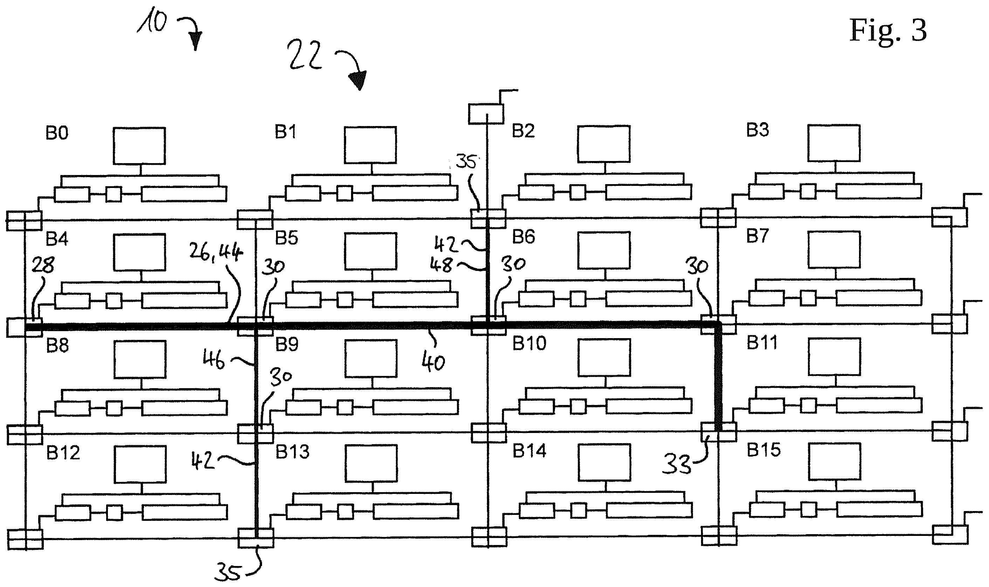

Mit Bezug auf Fig. 3 wird erläutert, wie in dem NoC 22 eine Zweigkommunikation verwirklicht werden kann.

Der Quellenknoten 28 soll eine Nachricht 26 an mehrere Zielknoten 32 versenden. Der Quellenknoten 28 und einer der Zielknoten 32 sind durch eine Hauptroute 40 verbunden. Dieser Zielknoten 32 wird auch Hauptzielknoten 33 genannt. Die übrigen Zielknoten 32 sind durch Zweigrouten 42 mit dem Quellenknoten 28 verbunden sind. Diese Zielknoten 32 werden auch Zweigzielknoten 35 genannt.

Die Nachricht 26 enthält Flusskontrolldaten 44, in denen die Hauptroute 40 und die Zweigrouten 42 definiert sind. Die Flusskontrolldaten 44, welche angeben an welche der Knoten 30, 32 die Nachricht 26 als nächstes übertragen werden, werden bei jedem Hop wie folgt geändert:
Der aktuelle Hop wird aus den Flusskontrolldaten 44 entfernt. Wenn ein Branch-Marker vorhanden ist, der angibt, dass die eine Zweigroute 42 von der Hauptroute 40 abzweigen soll, werden alle Hops der Zweigroute 42 aus den Flusskontrolldaten 44 für die Hauptroute 40 entfernt. Die Nachricht 26 wird entlang der Hauptroute 40 mit geänderte Flusskontrolldaten 44 gesendet und entlang der Zweigroute 42 mit Flusskontrolldaten 44 für die Zweigroute 42.

Die Flusskontrolldaten 44 umfassen einen Flit mit vier Hops, wie nachfolgend dargestellt. An Hop 1 und Hop 2 gibt es jeweils eine Abzweigung von der Hauptroute

| **Head Flit** | | | | |
|---|---|---|---|---|
| Hop 1 | Hop 2 | Hop 3 | Hop 4 | *nextflit* |
| *Branch 1* | S | S | *end* | |
| E | *Branch 2* | N | *end* | |
| E | E | S | *end* | |

Der Quellenknoten 28 (B4) sendet die Nachricht 26 zunächst in Richtung E aus. Der Zwischenknoten 30 (B5) empfängt die Nachricht 26 und verteilt die Nachricht 26 anhand der Flusskontrolldaten 44 weiter. An Hop 1 ist eine Abzweigung in einen ersten Zweig 46 und eine Weiterleitung in Richtung E vorgesehen.

Der Zwischenknoten 30 (B5) sendet die Nachricht 26 mit den folgenden Flusskontrolldaten 44 an in Richtung E entlang der Hauptroute 40 an den Zwischenknoten 30 (B6) weiter:

| **Head Flit** | | | | |
|---|---|---|---|---|
| | Hop 2 | Hop 3 | Hop 4 | *nextflit* |
| | *Branch 2* | N | *end* | |
| | E | S | *end* | |

Der Zwischenknoten 30 leitet ferner eine Kopie der Nachricht 26 und folgende Flusskontrolldaten 44 in Richtung S entlang des ersten Zweigs 46 an den Zwischenknoten 30 (B9) weiter:

| **Head Flit** | | | | |
|---|---|---|---|---|
| | | Hop 3 | Hop 4 | *nextflit* |
| | | S | *end* | |

Der Zwischenknoten 30 (B9) leitet schließlich die Nachricht 26 in Richtung S entlang des ersten Zweigs 46 an den Zielknoten 32 (B13) weiter, der sodann die Nachricht über seinen lokalen Port 25 an die Funktionskomponente 14 ausgibt.

Der Zwischenknoten 30 (B6) verfährt entsprechend und sendet die Nachricht 26 sowohl in Richtung E entlang der Hauptroute 40 zu dem Zwischenknoten 30 (B7) mit den folgenden Flusskontrolldaten 44:

| **Head Flit** | | | | |
|---|---|---|---|---|
| | | Hop 3 | Hop 4 | *nextflit* |
| | | S | *end* | |

Der Zwischenknoten 30 (B6) sendet die Nachricht 26 zudem in Richtung N entlang des zweiten Zweigs 48 zu dem Zielknoten 32 (B2) mit folgenden Flusskontrolldaten 44.

| **Head Flit** | | | | |
|---|---|---|---|---|
| | | | Hop 4 | *nextflit* |
| | | | *end* | |

Der Zwischenknoten 30 (B7) leitet die Nachricht 26 schließlich an den Zielknoten 32 (B11) mit folgenden Flusskontrolldaten 44 weiter:

| **Head Flit** | | | | |
|---|---|---|---|---|
| | | | Hop 4 | *nextflit* |
| | | | *end* | |

Somit ist die Nachricht 26 von dem Quellenknoten 28 (B4) an die drei Zielknoten 32 (B6, B11, B13) geroutet worden, indem die Nachricht 26 entlang der Hauptroute 40 von dem Quellenknoten 28 (B4) zu dem Hauptzielknoten 33 (B11) gesandt worden ist, während die Nachricht 26 zudem entlang der Zweige 46, 48 zu den Zweigzielknoten 35 (B6, B13) geroutet worden ist.

Im Unterschied zu herkömmlicher Multicast-Übertragung wird die Nachricht 26 nicht nacheinander durch alle Zielknoten 32 geroutet, sondern ggfs. abzweigend von der Hauptroute 40 direkt zu den Zielknoten 32 geleitet, die jeweils der letzte Knoten der jeweiligen Route sind.

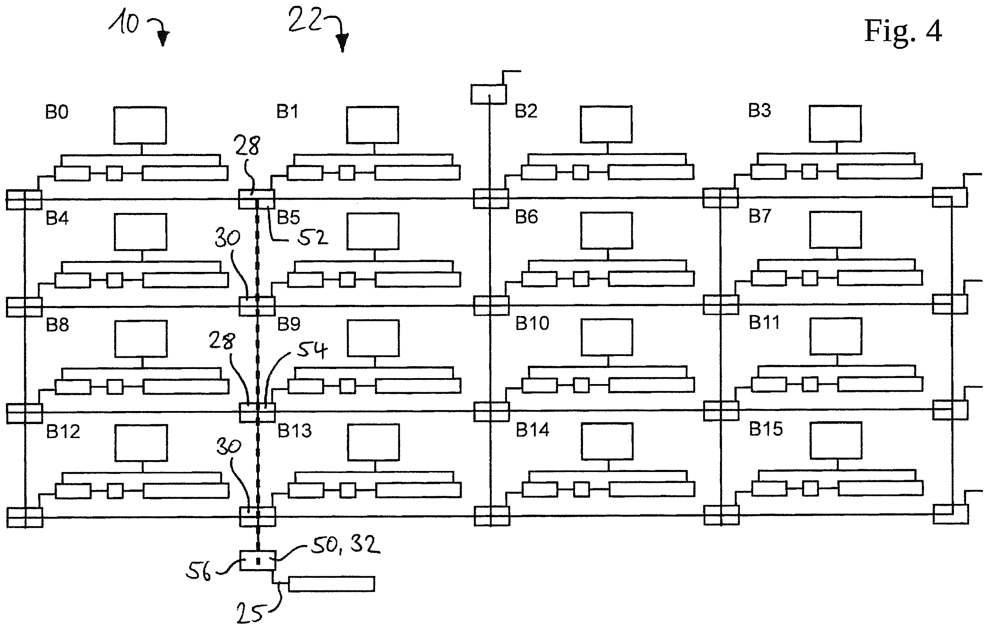

Mit Bezug auf Fig. 4 wird erläutert, wie in dem NoC 22 ein virtueller Bus verwirklicht werden kann. In dieses NoC 22 ist ferner ein Speicherknoten 50 eingebunden. Der Speicherknoten 50 ist daher gleichzeitig Zielknoten 32.

Das NoC 22 ist zeitsensitiv konfiguriert, so dass eine Mehrzahl von vorbestimmten Zeitslots für individuelle Sendeoperationen von Quellenknoten 28 bereitgestellt wird. Die Zeitslots sind relativ zueinander zeitverschoben um eine Anzahl von Taktzyklen des NoC 22, die der Anzahl von Taktzyklen entspricht, welche eine Nachricht 26 von einem ersten Knoten 52 (B1) zu einem zweiten Knoten 54 (B9), von einem zweiten Knoten 54 (B9) zu einem dritten Knoten 56 (B13), und so weiter benötigt.

Im weiteren wird der Einfachheit halber angenommen, dass die Nachricht 26 von einem Knoten zum nächsten Knoten genau einen Taktzyklus benötigt. Es können jedoch auch mehrere Taktzyklen sein.

Die Funktionsweise des virtuellen Busses wird nachfolgend beispielhaft beschrieben anhand von zwei Quellenknoten 28 (B1, B9), welche Daten an den Speicherknoten 50 senden.

Der Quellenknoten 28 (B1) sendet in seinem Zeitslot eine Nachricht in Richtung des Speicherknotens 50 aus. Die Nachricht wird über einen Zwischenknoten 30 (B5) an den Quellenknoten 28 (B9) geleitet. Dieser Quellenknoten 28 (B9) prüft, ob zu seinem Zeitslot die Nachricht des vorigen Quellenknotens 28 (B1) gerade eingeht oder ausgeht. Falls dies nicht der Fall ist, kann der Quellenknoten 28 (B9) seine Nachricht in Richtung Speicherknoten 50 senden. Da der Zeitslot für den anderen Quellenknoten 28 (B1) bereits verstrichen ist, kann dieser nicht senden und eine Kollision der Nachrichten wird vermieden.

Die Nachrichten werden sodann über den Zwischenknoten 30 (B13) an den Zielknoten 32 (hier: den Speicherknoten 50) weitergeleitet und von diesem über seinen lokalen Port 25 an den eigentlichen Speicher ausgegeben.

In einer Round-Robin-Variante erhalten die Quellenknoten 28 jeweils einen Flag, der angibt, dass der jeweilige Quellenknoten 28 eine Nachricht senden darf. Wenn ein Quellenknoten 28 eine Nachricht in seinem Zeitslot gesandt hat wird der Flag gelöscht. Der jeweilige Quellenknoten 28 kann dann keine Nachricht mehr senden.

Der Zielknoten 32 sendet eine Magic-Nachricht über eine Rückroute an alle Quellenknoten 28 zurück, wobei die Magic-Nachricht die Quellenknoten 28 veranlasst ihren Flag wieder zu setzen.

In einer Time-Division-Multiple-Access-Variante (TDMA-Variante) werden separate Zeitslots für jeden Quellenknoten 28 zu dem Zielknoten 32 implementiert. Hierfür ist nicht unbedingt ein virtueller Bus erforderlich.

Die zuvor beschriebenen Varianten können auch kombiniert werden, um die zur Verfügung stehende Bandbreite für die Quellenknoten 28 zu regulieren.

Mit den hierin beschriebenen Maßnahmen kann der Funktionsumfang von NoCs (22) erweitert werden. Insbesondere wird eine Methode zur verzweigten Kommunikation vorgeschlagen.

### Bezugszeichenliste

- 10: Mikrochip
- 12: Routerkomponente
- 14: Funktionskomponente
- 16: Funktionsblock
- 18: Komponentenanschluss
- 20: Routinganschluss
- 22: NoC (Network-on-Chip)
- 24: Routerknoten
- 25: lokaler Port
- 26: Nachricht
- 28: Quellenknoten
- 30: Zwischenknoten
- 32: Zielknoten
- 33: Hauptzielknoten
- 34: kombinierte Nachricht
- 35: Zweigzielknoten
- 36: Routensegment
- 38: weiterer Zwischenknoten
- 40: Hauptroute
- 42: Zweigroute
- 44: Flusskontrolldaten
- 46: erster Zweig
- 48: zweiter Zweig
- 50: Speicherknoten
- 52: erster Knoten
- 54: zweiter Knoten
- 56: dritter Knoten

- B0, ..., B15: Funktionseinheit

## Patentansprüche

1. Verfahren zur verzweigten Kommunikation in einem statisch gerouteten und zeitsensitiven NoC (22), das eine Mehrzahl von Routerknoten (24) aufweist, die untereinander verbunden sind, so dass es den Routerknoten (24) ermöglicht ist, untereinander Nachrichten (26) auszutauschen, wobei das Verfahren umfasst:
a) Senden einer Nachricht (26), die Flusskontrolldaten (44) und Nutzdaten enthält, durch einen Quellenknoten (28) an einen Routerknoten (24), wobei die Flusskontrolldaten (44) wenigstens ein Flit mit wenigstens einem Hop enthalten, die eine Hauptroute (40) zu einem Hauptzielknoten (33) und wenigstens eine Zweigroute (42) zu einem Zweigzielknoten (35) definieren;
b) Empfangen der Nachricht (26) durch den Routerknoten (24);
c) Ändern der in Schritt b) empfangenen Flusskontrolldaten (44) durch den Routerknoten (24) um geänderte Flusskontrolldaten (44) zu erhalten, indem, um geänderte Flusskontrolldaten (44) für die Hauptroute (40) zu erhalten, aus dem aktuellen Flit der aktuelle Hop entfernt wird und, wenn der aktuelle Hop einen Branch-Marker enthält, alle dem Branch-Marker zugeordneten Hops aus den empfangenen Flusskontrolldaten (44) entfernt werden, und indem, um geänderte Flusskontrolldaten (44) für die Zweigroute (42) zu erhalten, alle dem Branch-Marker zugeordneten Hops in die Flusskontrolldaten (44) für die Zweigroute (42) eingetragen werden; und
d) Weiterleiten der Nachricht (26), welche die in Schritt c) geänderten Flusskontrolldaten (44) enthält, entsprechend den in Schritt b) empfangenen Flusskontrolldaten (44), wobei die Nachricht (26) entlang der Hauptroute (40) mit den in Schritt c) erhaltenen Flusskontrolldaten (44) für die Hauptroute (40) weitergeleitet wird und wobei die Nachricht (26) entlang der Zweigroute (42) mit Flusskontrolldaten (44) für die Zweigroute (42) weitergeleitet wird.

2. Verfahren nach Anspruch 1, wobei in Schritt d) das Weiterleiten der Nachricht (26) entlang der Zweigroute (42) nach einer Abzweigung von der Hauptroute (40) dadurch erfolgt, dass der aktuelle Hop der Zweigroute (42) entfernt wird und die Nachricht (26) mit den so veränderten Flusskontrolldaten (44) an den nächsten Knoten entlang der Zweigroute (42) weitergeleitet wird.

3. NoC (22), das eine Mehrzahl von Routerknoten (24) aufweist, die untereinander verbunden sind, so dass es den Routerknoten (24) ermöglicht ist, untereinander Nachrichten (26) auszutauschen, wobei das NoC (22) konfiguriert ist, gemäß einem Verfahren nach einem der vorhergehenden Ansprüche zu operieren.

4. Computerprogramm umfassend Befehle, die bei der Ausführung der Befehle durch das NoC (22) nach Anspruch 3 dieses veranlassen, eines der Verfahren nach einem der Ansprüche 1 oder 2 auszuführen.

5. Datenträgersignal, das das Computerprogramm nach Anspruch 4 überträgt.

6. Flusskontrolldatenstruktur für Flusskontrolldaten (44) zur Verwendung in einem NoC (22), wobei die Flusskontrolldaten (44) ein Flit mit einem Hop aufweisen, wobei der Hop eine Hauptroutenangabe und einen Branch-Marker mit jeweils zugeordneten Hops aufweist, wobei die die Hauptroutenangabe einen Routerknoten (24) veranlasst, eine Nachricht (26) an den nächsten Hop entlang einer Hauptroute (40) weiterzuleiten, und wobei der Branch-Marker einen Routerknoten (24) veranlasst, die Nachricht (26) an den nächsten Hop entlang einer von der Hauptroute (40) abgezweigen Zweigroute (42) weiterzuleiten.

## Claims

1. Method for branched communication in a statically routed and time-sensitive NoC (22) which has a multiplicity of router nodes (24) which are interconnected so that the router nodes (24) are enabled to exchange messages (26) with one another, wherein the method comprises:
a) transmitting by a source node (28) to a router node (24) of a message (26) which contains flow control data (44) and payload data, wherein the flow control data (44) contain at least one flit with at least one hop which define a main route (40) to a main destination node (33) and at least one branch route (42) to a branch destination node (35);
b) receiving of the message (26) by the router node (24) ;
c) modifying by the router node (24) of the flow control data (44) received in step b) in order to obtain modified flow control data (44), whereby, in order to obtain modified flow control data (44) for the main route (40), the current hop is removed from the current flit and, if the current hop contains a branch marker, all hops assigned to the branch marker are removed from the received flow control data (44), and whereby, in order to obtain modified flow control data (44) for the branch route (42), all hops assigned to the branch marker are recorded in the flow control data (44) for the branch route (42) ; and
d) forwarding of the message (26) which contains the flow control data (44) modified in step c), according to the flow control data (44) received in step b), wherein the message (26) is forwarded along the main route (40) with the flow control data (44) for the main route (40) obtained in step c), and wherein the message (26) is forwarded along the branch route (42) with flow control data (44) for the branch route (42).

2. Method according to Claim 1, wherein, in step d), the forwarding of the message (26) along the branch route (42) is performed following a branching off from the main route (40), in that the current hop of the branch route (42) is removed and the message (26) is forwarded with the flow control data (44) modified in this way to the next node along the branch route (42).

3. NoC (22) which has a plurality of router nodes (24) which are interconnected so that the router nodes (24) are enabled to exchange messages (26) with one another, wherein the NoC (22) is configured to operate using a method according to one of the preceding claims.

4. Computer program comprising commands which, when executed by the NoC (22) according to Claim 3, cause said NoC to carry out one of the methods according to one of Claims 1 or 2.

5. Data carrier signal which transmits the computer program according to Claim 4.

6. Flow control data structure for flow control data (44) for use in an NoC (22), wherein the flow control data (44) have a flit with a hop, wherein the hop has a main route indicator and a branch marker in each case with assigned hops, wherein the main route indicator causes a router node (24) to forward a message (26) to the next hop along a main route (40), and wherein the branch marker causes a router node (24) to forward the message (26) to the next hop along a branch route (42) branched off from the main route (40).

## Revendications

1. Procédé de communication ramifiée dans un NoC (Network-on-Chip) (22) à routage statique et sensible au temps, comportant une pluralité de nœuds de routage (24) qui sont interconnectés de telle sorte que les nœuds de routage (24) sont en mesure d'échanger des messages (26), le procédé comprenant :
a) l'envoi d'un message (26) qui contient des données de contrôle de flux (44) et des données utiles, par un nœud source (28) à un nœud de routage (24), les données de contrôle de flux (44) contenant au moins un flit comprenant au moins un saut qui définit une route principale (40) vers un nœud de destination principal (33) et au moins une route de branchement (42) vers un nœud de destination de branchement (35) ;
b) la réception du message (26) par le nœud de routage (24) ;
c) la modification des données de contrôle de flux (44) reçues à l'étape b) par le nœud de routage (24) afin d'obtenir des données de contrôle de flux modifiées (44), en retirant, afin d'obtenir des données de contrôle de flux modifiées (44) pour la route principale (40), le saut actuel du flit actuel et, si le saut actuel contient un marqueur de branchement, en retirant tous les sauts associés au marqueur de branchement des données de contrôle de flux (44) reçues, et en insérant, afin d'obtenir des données de contrôle de flux modifiées (44) pour la route de branchement (42), tous les sauts associés au marqueur de branchement dans les données de contrôle de flux (44) pour la route de branchement (42) ; et
d) l'acheminement du message (26), qui contient les données de contrôle de flux modifiées (44) de l'étape c), conformément aux données de contrôle de flux (44) reçues à l'étape b), le message (26) étant acheminé le long de la route principale (40) avec les données de contrôle de flux (44) destinées à la route principale (40) et obtenues à l'étape c) et le message (26) étant acheminé le long de la route de branchement (42) avec les données de contrôle de flux (44) destinées à la route de branchement (42).

2. Procédé selon la revendication 1, dans lequel, à l'étape d), l'acheminement du message (26) le long de la route de branchement (42) après une bifurcation de la route principale (40) s'effectue en retirant le saut actuel de la route de branchement (42) et en acheminant le message (26) avec les données de contrôle de flux (44) ainsi modifiées vers le nœud suivant le long de la route de branchement (42).

3. NoC (22), comportant une pluralité de nœuds de routage (24) qui sont interconnectés de telle sorte que les nœuds de routage (24) sont en mesure d'échanger des messages (26), le NoC (22) étant configuré pour fonctionner conformément à un procédé selon l'une quelconque des revendications précédentes.

4. Programme d'ordinateur comprenant des instructions qui, lors de l'exécution des instructions par le NoC (22) selon la revendication 3, amènent ce dernier à mettre en œuvre l'un des procédés selon l'une quelconque des revendications 1 ou 2.

5. Signal porteur de données qui transmet le programme d'ordinateur selon la revendication 4.

6. Structure de données de contrôle de flux pour des données de contrôle de flux (44) destinées à être utilisées dans un NoC (22), les données de contrôle de flux (44) comportant un flit comprenant un saut, le saut comportant une indication de route principale et un marqueur de branchement comprenant des sauts respectivement associés, l'indication de route principale amenant un nœud de routage (24) à acheminer un message (26) vers le saut suivant le long d'une route principale (40), et le marqueur de branchement amenant un nœud de routage (24) à acheminer le message (26) vers le saut suivant le long d'une route de branchement (42) bifurquant de la route principale (40).
